# EUROPÄISCHE PATENTSCHRIFT

(11) **EP 1 685 181 B1**
(45) Veröffentlichungstag und Bekanntmachung des Hinweises auf die Patenterteilung: **20.08.2008**
(21) Anmeldenummer: 04797595.8
(22) Anmeldetag: 04.11.2004
(51) Int. Cl.: C08G 71/02, C08G 83/00

(54) **HOCHFUNKTIONELLE, HOCHVERZWEIGTE POLYHARNSTOFFE**
HIGHLY FUNCTIONAL, HIGHLY BRANCHED POLYUREAS
POLYUREES HAUTEMENT FONCTIONNELLES ET FORTEMENT RAMIFIEES

(30) Priorität: 04.11.2003 DE 10351401
(43) Veröffentlichungstag der Anmeldung: 02.08.2006
(73) Patentinhaber: BASF SE, 67056 Ludwigshafen (DE)
(72) Erfinder: BRUCHMANN, Bernd, 67251 Freinsheim (DE); STUMBE, Jean-Francois, F-67200 Strasbourg (FR); WAGNER, Eva, 67346 Speyer (DE)
(74) Vertreter: Isenbruck, Günter
(86) Internationale Anmeldenummer: PCT/EP2004/012468
(87) Internationale Veröffentlichungsnummer: WO 2005/044897

(56) Entgegenhaltungen:
- US-A- 4 596 866
- US-A1- 2002 161 113
- A. V. AMBADE, A. KUMAR: "An Efficient Route for the Synthesis of Hyperbranched Polymers and Dendritic Building Blocks Based on Urea Linkages" JOURNAL OF POLYMER SCIENCE, PART A, POLYMER CHEMISTRY, Bd. 39, 2001, Seiten 1295-1304, XP002320167 in der Anmeldung erwähnt

## Beschreibung

Die vorliegende Erfindung betrifft gezielt aufgebaute hochfunktionelle hochverzweigte Polyharnstoffe auf Basis von Carbonaten und Polyaminen sowie ein Verfahren zu ihrer Herstellung.

Die erfindungsgemäßen hochfunktionellen hochverzweigten Polyharnstoffe können u.a. als Haftvermittler, Thixotropiermittel oder als Bausteine zur Herstellung von Lacken, Überzügen, Klebstoffen, Dichtmassen, Gießelastomeren oder Schaumstoffen verwendet werden.

Polyharnstoffe werden üblicherweise durch Umsetzung von Isocyanaten mit Wasser oder von Isocyanaten mit Aminen erhalten. Die Reaktionen sind stark exotherm und es werden Produkte erhalten, die uneinheitlich sind und einen hohen Vernetzungsgrad aufweisen. Aus diesem Grund sind Polyharnstoffe in der Regel unlöslich in bekannten organischen Lösemitteln. Siehe dazu auch Becker/Braun, Kunststoff-Handbuch Band 7, Polyurethane, Hanser-Verlag 1993.

Definiert aufgebaute, Harnstoffgruppen enthaltende hochfunktionelle Polymere sind bekannt.

WO 98/52995 beschreibt dendrimere, hochverzweigte Polyurethanpolyole, die sich unter Verwendung von Isocyanaten mit einer primären und einer tertiären NCO-Gruppe und Dialkanolaminen durch einen schalenförmigen (generationsweisen) Aufbau herstellen lassen. Bei der Synthese entstehen Harnstoff-Urethane mit einem deutlichen Übergewicht an Urethangruppen im Molekül (Verhältnis Harnstoffgruppen zu Urethangruppen 1 : 2).

EP-A-1 026 185 beschreibt die Herstellung von hochverzweigten Polyurethanpolyolen, die ohne Anwendung von Schutzgruppentechniken durch gezielten Aufbau mittels AB₂- und AB₃-Strukturen unter Ausnutzung von intramolekularen Reaktivitätsunterschieden bei den Reaktionspartnern hergestellt werden. Die Reaktion wird durch Zugabe eines der beiden Reaktionspartner im Überschuss abgebrochen. Auch hier werden Aminoalkohole eingesetzt, bei den verknüpfenden Gruppen sind ebenfalls Urethangruppen dominierend (Verhältnis Harnstoffgruppen zu Urethangruppen 1:2 oder 1:3).

DE-A-100 30 869 beschreibt die Herstellung von mehrfach funktionellen Polyisocyanat-Polyadditionsprodukten, wobei als Isocyanat-reaktive Komponenten Aminoalkohole wie auch Di- und Triamine als Harnstoffbildner genannt sind. Diese Amine werden jedoch in Verbindung mit Alkoholen eingesetzt, da die alleinige Umsetzung von Diisocyanat mit Di-oder Triamin allein wegen der Exothermie der Reaktion nur schwer beherrschbar ist.

Hochfunktionelle hyperverzweigte Polyharnstoffe werden beschrieben von A. Kumar und E.W. Meijer, Chem. Commun. 1629 (1998) und von den gleichen Autoren in Polym. Prep. 39, (2), 619 (1998). Die dort beschriebenen Produkte werden hergestellt aus 3,5-Diaminobenzoesäure (1), die in mehreren Reaktionsschritten in das Amin-blockierte Carbonsäureazid (2) überführt wird. Anschließend werden die Schutzgruppen abgespalten und wird unter Erhitzen aus dem 3,5-Diaminobenzoylazid unter Eliminierung von Stickstoff ein Polyharnstoff gebildet. Die Produkte werden in den genannten Publikationen als extrem schwerlöslich beschrieben.

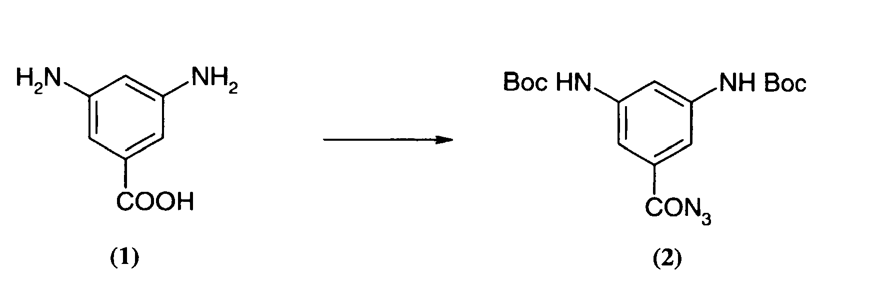

A. V. Ambade und A. Kumar, J. Polym. Sci. Part A, Polym. Chem. 39, 1295 - 1304 (2001) beschreiben hochfunktionelle hochverzweigte Polyharnstoffe, die analog aus 3,5-Diaminobenzoylazid bzw. aus 5-Aminoisophthaloylazid (3) hergestellt werden.

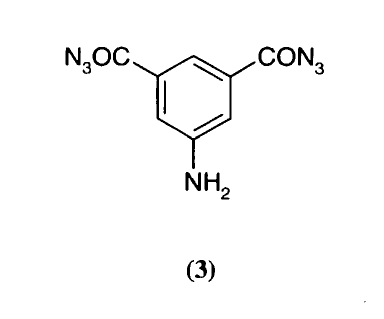

Die erhaltenen Produkte werden von den Autoren ebenfalls als unlöslich in allen gängigen Lösemitteln beschrieben.
Die Azid-Route ist aufgrund folgender Überlegungen auch aus technischer Sicht unattraktiv:
- die mehrstufige Synthese unter Anwendung von Schutzgruppentechniken verursacht hohe Produktionskosten;
- es lassen sich aufgrund der Azid-Reaktivität nur aromatische Harnstoff-Produkte herstellen;
- der Umgang mit aromatischen Carbonsäureaziden bzw. aromatischen Aminen im großen Maßstab ist aus sicherheitstechnischen Gründen bedenklich.

Hochfunktionelle hyperverzweigte aliphatische Polyharnstoffe lassen sich auch gemäß WO 98/50453 oder nach S. Rannard und N. Davis, Polym. Mat. Sci. Eng. 84, 2 (2001) herstellen. Nach dem dort beschriebenen Verfahren werden Triamine mit drei primären oder zwei primären und einer sekundären Aminfunktion, z.B. Trisaminoethylamin oder Dipropylentriamin, mit Carbonyldiimidazol als Phosgen-analoge Verbindung umgesetzt. Es entstehen zunächst Imidazolide, die dann intermolekular zu den Polyharnstoffen weiterreagieren. Der Nachteil dieser Synthese ist zum einen der vergleichsweise hohen Preis für Carbonyldiimidazol, zum anderen die Tatsache, dass die resultierenden Produkte immer terminale Imidazolid-Gruppen enthalten, die labil sind und über einen Hydrolyseschritt in Harnstoffgruppen umgewandelt werden müssen.

Die US 2002/0161113 A1 beschreibt die Herstellung hyperverzweigter Polyharnstoffe durch Umsetzung von Polyaminen mit Polyisocyanaten. Die Edukte werden bei einer Temperatur von -78°C zusammengegeben. Dieses Verfahren ist für eine Herstellung der Produkte im großtechnischen Maßstab sehr aufwendig.

Der Erfindung lag daher die Aufgabe zugrunde, aliphatische und aromatische hochfunktionelle hochverzweigte Polyharnstoffe bereitzustellen, deren Strukturen sich leicht an die Erfordernisse der Anwendung anpassen lassen und die aufgrund ihres definierten Aufbaus vorteilhafte Eigenschaften, wie hohe Funktionalität, hohe Reaktivität und gute Löslichkeit aufweisen, sowie ein einfach durchzuführendes Verfahren zur Herstellung der hochfunktionellen hochverzweigten Polyharnstoffe.

Gelöst wird die Aufgabe durch ein Verfahren zur Herstellung von hochfunktionellen hochverzweigten Polyharnstoffen, bei dem ein oder mehrere Carbonate mit einem oder mehreren Aminen mit mindestens zwei primären und/oder sekundären Aminogruppen umgesetzt werden, wobei mindestens ein Amin mindestens drei primäre und/oder sekundäre Aminogruppen aufweist.

Gegenstand der Erfindung sind auch die so hergestellten Polyharnstoffe selbst.

Geeignete Carbonate sind aliphatische, aromatische oder gemischt aliphatisch-aromatische Carbonate, bevorzugt sind aliphatische Carbonate wie Dialkylcarbonate mit C₁-C₁₂-Alkylresten. Beispiele sind Ethylencarbonat, 1,2- oder 1,3-Propylencarbonat, Diphenylcarbonat, Ditolylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Diheptylcarbonat, Dioctylcarbonat, Didecylcarbonat oder Didodecylcarbonat. Besonders bevorzugt eingesetzte Carbonate sind Dimethylcarbonat, Diethylcarbonat, Dibutylcarbonat und Diisobutylcarbonat.

Carbonate können beispielsweise durch Reaktion der entsprechenden Alkohole oder Phenole mit Phosgen hergestellt werden. Weiterhin können sie durch oxidative Carbonylierung der entsprechenden Alkohole oder Phenole mit CO in Gegenwart von Edelmetallen, Sauerstoff oder NOₓ hergestellt werden. Methoden zur Herstellung von Carbonaten sind beispielsweise in Ullmann's Encyclopedia of Industrial Chemistry, 6th Edition, 2000 Electronic Release, Verlag Wiley-VCH beschrieben.

Erfindungsgemäß werden die Carbonate mit einem oder mehreren Aminen mit mindestens zwei primären und/oder sekundären Aminogruppen umgesetzt, wobei mindestens ein Amin mindesten drei primäre und/oder sekundäre Aminogruppen aufweist. Amine mit zwei primären und/oder sekundären Aminogruppen bewirken eine Kettenverlängerung innerhalb der Polyharnstoffe, während Amine mit drei oder mehr primären oder sekundären Aminogruppen ursächlich für die Verzweigungen in den erhaltenen hochfunktionellen, hochverzweigten Polyharnstoffen sind.

Geeignete Amine mit zwei gegenüber einer Carbonat- oder Carbamatgruppe reaktiven, primären oder sekundären Aminogruppen sind beispielsweise Ethylendiamin, N-Alkylethylendiamin, Propylendiamin, 2,2-Dimethyl-1,3-propylendiamin, N-Alkylpropylendiamin, Butylendiamin, N-Alkylbutylendiamin, Pentandiamin, Hexamethylendiamin, N-Alkylhexamethylendiamin, Heptandiamin, Octandiamin, Nonandiamin, Decandiamin, Dodecandiamin, Hexadecandiamin, Toluylendiamin, Xylylendiamin, Diaminodiphenylmethan, Diaminodicyclohexylmethan, Phenylendiamin, Cyclohexylendiamin, Bis(aminomethyl)cyclohexan, Diaminodiphenylsulfon, Isophorondiamin, 2-Butyl-2-ethyl-1,5-pentamethylendiamin, 2,2,4- oder 2,4,4-Trimethyl-1,6-hexamethylendiamin, 2-Aminopropylcyclohexylamin, 3(4)-Aminomethyl-1-methylcyclohexylamin, 1,4-Diamino-4-methylpentan, Amin-terminierte Polyoxyalkylenpolyole (sogenannte Jeffamine) oder Amin-terminierte Polytetramethylenglykole.

Bevorzugt weisen die Amine zwei primäre Aminogruppen auf, wie zum Beispiel Ethylendiamin, Propylendiamin, 2,2-Dimethyl-1,3-propandiamin, Butylendiamin, Pentandiamin, Hexamethylendiamin, Heptandiamin, Octandiamin, Nonandiamin, Decandiamin, Dodecandiamin, Hexadecandiamin, Toluylendiamin, Xylylendiamin, Diaminodiphenylmethan, Diaminodicyclohexylmethan, Phenylendiamin, Cyclohexylendiamin, Diaminodiphenylsulfon, Isophorondiamin, Bis(aminomethyl)cyclohexan, 2-Butyl-2-ethyl-1,5-pentamethylendiamin, 2,2,4- oder 2,4,4-Trimethyl-1,6-hexamethylendiamin, 2-Aminopropylcyclohexylamin, 3(4)-Aminomethyl-1-methylcyclohexylamin, 1,4-Diamino-4-methylpentan, Amin-terminierte Polyoxyalkylenpolyole (sogenannte Jeffamine) oder Amin-terminierte Polytetramethylenglykole.

Besonders bevorzugt sind Butylendiamin, Pentandiamin, Hexamethylendiamin, Toluylendiamin, Xylylendiamin, Diaminodiphenylmethan, Diaminodicyclohexylmethan, Phenylendiamin, Cyclohexylendiamin, Diaminodiphenylsulfon, Isophorondiamin, Bis(aminomethyl)cyclohexan, Amin-terminierte Polyoxyalkylenpolyole (sogenannte Jeffamine) oder Amin-terminierte Polytetramethylenglykole.

Geeignete Amine mit drei oder mehr gegenüber einer Carbonat- oder Carbamatgruppe reaktiven primären und/oder sekundären Aminogruppen sind beispielsweise Tris(aminoethyl)amin, Tris(aminopropyl)amin, Tris(aminohexyl)amin, Trisaminohexan, 4-Aminomethyl-1,8-octamethylendiamin, Trisaminononan, Bis(aminoethyl)amin, Bis(aminopropyl)amin, Bis(aminobutyl)amin, Bis(aminopentyl)amin, Bis(aminohexyl)amin, N-(2-Aminoethyl)propandiamin, Melamin, oligomere Diaminodiphenylmethane, N,N'-Bis(3-aminopropyl)ethylendiamin, N,N'-Bis(3-aminopropyl)butandiamin, N,N,N',N'-Tetra(3-aminopropyl)ethylendiamin, N,N,N',N'-Tetra(3-aminopropyl)butylendiamin, drei- oder höherfunktionelle Amin-terminierte Polyoxyalkylenpolyole (sogenannte Jeffamine), drei- oder höherfunktionelle Polyethylenimine oder drei- oder höherfunktionelle Polypropylenimine.

Bevorzugte Amine mit drei oder mehr reaktiven primären und/oder sekundären Aminogruppen sind Tris(aminoethyl)amin, Tris(aminopropyl)amin, Tris(aminohexyl)amin, Trisaminohexan, 4-Aminomethyl-1,8-octamethylendiamin, Trisaminononan, Bis(aminoethyl)amin, Bis(aminopropyl)amin, Bis(aminobutyl)amin, Bis(aminopentyl)amin, Bis(aminohexyl)amin, N-(2-Aminoethyl)propandiamin, Melamin oder drei- oder höherfunktionelle Amin-terminierte Polyoxyalkylenpolyole (sogenannte Jeffamine).

Besonders bevorzugt sind Amine mit drei oder mehr primären Aminogruppen, wie Tris(aminoethyl)amin, Tris(aminopropyl)amin, Tris(aminohexyl)amin, Trisaminohexan, 4-Aminomethyl-1,8-octamethylendiamin, Trisaminononan oder drei- oder höherfunktionelle Amin-terminierte Polyoxyalkylenpolyole (sogenannte Jeffamine).

Selbstverständlich können auch Gemische der genannten Amine eingesetzt werden.

Im Allgemeinen werden sowohl Amine mit zwei primären oder sekundären Aminogruppen neben Aminen mit drei oder mehr primären oder sekundären Aminogruppen eingesetzt. Derartige Amingemische lassen sich auch durch die mittlere Aminfunktionalität charakterisieren, wobei nicht reaktive tertiäre Aminogruppen außer Betracht bleiben. So weist beispielsweise ein äquimolares Gemisch aus einem Diamin und einem Triamin eine mittlere Funktionalität von 2,5 auf. Bevorzugt werden erfindungsgemäß solche Amingemische umgesetzt, bei denen die mittlere Aminfunktionalität von 2,1 bis 10, insbesondere von 2,1 bis 5 beträgt.

Die Reaktion des Carbonats mit dem Di- oder Polyamin zum erfindungsgemäßen hochfunktionellen hochverzweigten Polyharnstoff erfolgt unter Eliminierung des in dem Carbonat gebundenen Alkohols oder Phenols. Reagiert ein Molekül Carbonat mit zwei Aminogruppen, so werden zwei Moleküle Alkohol oder Phenol eliminiert und eine Harnstoffgruppe gebildet. Reagiert ein Molekül Carbonat mit nur einer Aminogruppe, so wird unter Eliminierung eines Moleküls Alkohol oder Phenol eine Carbamatgruppe gebildet.

Die Umsetzung des Carbonats oder der Carbonate mit dem Amin oder den Aminen kann in einem Lösungsmittel erfolgen. Dabei können allgemein alle Lösungsmittel eingesetzt werden, die gegenüber den jeweiligen Edukten inert sind. Bevorzugt wird in organischen Lösungsmitteln, wie Decan, Dodecan, Benzol, Toluol, Chlorbenzol, Dichlorbenzol, Xylol, Dimethylformamid, Dimethylacetamid oder Solventnaphtha gearbeitet.

In einer bevorzugten Ausführungsform des erfindungsgemäßen Verfahrens wird die Umsetzung in Substanz, also ohne inertes Lösungsmittel durchgeführt. Der bei der Reaktion zwischen Amin und Carbonat bzw. Carbamat freiwerdende Alkohol bzw. das freiwerdende Phenol können destillativ, gegebenenfalls bei vermindertem Druck, abgetrennt und so aus dem Reaktionsgleichgewicht entfernt werden. Dadurch wird auch die Umsetzung beschleunigt.

Zur Beschleunigung der Reaktion zwischen Amin und Carbonat bzw. Carbamat können auch Katalysatoren oder Katalysatorgemische zugegeben werden. Geeignete Katalysatoren sind im allgemeinen Verbindungen, die die Carbamat- oder Harnstoffbildung katalysieren, zum Beispiel Alkali- oder Erdalkalihydroxide, Alkali- oder Erdalkalihydrogencarbonate, Alkali- oder Erdalkalicarbonate, tertiäre Amine, Ammoniumverbindungen, Aluminium-, Zinn-, Zink-, Titan-, Zirkon- oder Wismut-organische Verbindungen. Beispielsweise können Lithium-, Natrium-, Kalium- oder Cäsiumhydroxid, Lithium-, Natrium-, Kalium- oder Cäsiumcarbonat, Diazabicyclooctan (DABCO), Diazabicyclononen (DBN), Diazabicycloundecen (DBU), Imidazole, wie Imidazol, 1-Methylimidazol, 2-Methylimidazol, 1,2-Dimethylimidazol, Titantetrabutylat, Dibutylzinnoxid, Dibutylzinndilaurat, Zinndioctoat, Zirkonacetylacetonat oder Gemische davon eingesetzt werden.

Die Zugabe des Katalysators erfolgt im Allgemeinen in einer Menge von 50 bis 10000, bevorzugt von 100 bis 5000 Gew. ppm, bezogen auf die Menge des eingesetzten Amins.

Die nach dem erfindungsgemäßen Verfahren hergestellten hochfunktionellen hochverzweigten Polyharnstoffe sind nach der Umsetzung, also ohne weitere Modifikation, entweder mit Amino- oder mit Carbamatgruppen terminiert. Sie lösen sich gut in polaren Lösemitteln, zum Beispiel in Wasser, Alkoholen, wie Methanol, Ethanol, Butanol, Alkohol/Wasser-Mischungen, Dimethylformamid, Dimethylacetamid, N-Methylpyrrolidon, Ethylencarbonat oder Propylencarbonat.

Unter einem hochfunktionellen Polyharnstoff im Sinne der Erfindung wird ein Produkt verstanden, das Harnstoffgruppen sowie mindestens drei, bevorzugt mindestens sechs, insbesondere mindestens zehn funktionelle Gruppen aufweist. Die Anzahl der funktionellen Gruppen ist prinzipiell nach oben nicht beschränkt, jedoch können Produkte mit einer sehr hohen Anzahl von funktionellen Gruppen unerwünschte Eigenschaften, beispielsweise eine hohe Viskosität oder eine schlechte Löslichkeit, aufweisen. Die hochfunktionellen Polyharnstoffe der vorliegenden Erfindung weisen im Allgemeinen nicht mehr als 200 funktionelle Gruppen, bevorzugt nicht mehr als 100 funktionelle Gruppen auf. Unter funktionellen Gruppen sind hier primäre, sekundäre oder tertiäre Aminogruppen oder Carbamatgruppen zu verstehen. Daneben kann der hochfunktionelle hochverzweigte Polyharnstoff weitere funktionelle Gruppen aufweisen, die nicht am Aufbau des hochverzweigten Polymers teilnehmen (siehe unten). Diese weiteren funktionellen Gruppen können durch Di- oder Polyamine eingeführt werden, welche neben primären und sekundären Aminogruppen noch weitere funktionelle Gruppen aufweisen.

Nachstehend wird der prinzipielle Aufbau der erfindungsgemäßen hochfunktionellen hochverzweigten Polyharnstoffe näher erläutert.

Bei der Herstellung der hochfunktionellen Polyharnstoffe kann das Verhältnis von Aminen mit mindestens zwei mit Carbonat- oder Carbamatgruppen reaktiven Aminogruppen zu dem Dicarbonat so eingestellt werden, dass das resultierende einfachste Kondensationsprodukt (im weiteren Kondensationsprodukt (A) genannt) im Mittel entweder eine Carbamatgruppe und mehr als eine mit der Carbamatgruppe reaktive Aminogruppe oder aber eine mit Carbamatgruppen reaktive Aminogruppe und mehr als eine Carbamatgruppe enthält. Als einfachste Struktur des Kondensationsproduktes (A) aus einem Dicarbonat und einem Di- oder Polyamin ergeben sich dabei die Anordnungen XYₙ oder XₙY, wobei n in der Regel eine Zahl zwischen 1 und 6, vorzugsweise zwischen 1 und 4, besonders bevorzugt zwischen 1 und 3 darstellt. X bezeichnet eine Carbamatgruppe, Y eine mit dieser reaktive Aminogruppe. Die reaktive Gruppe, die dabei als einzelne Gruppe vorliegt, wird im weiteren Text als "fokale Gruppe" bezeichnet.

Beträgt beispielsweise bei der Herstellung des einfachsten Kondensationsproduktes (A) aus einem Carbonat und einem zweiwertigen Amin das Molverhältnis 1:1, so resultiert im Mittel ein Molekül des Typs XY, veranschaulicht durch die allgemeine Formel 1.

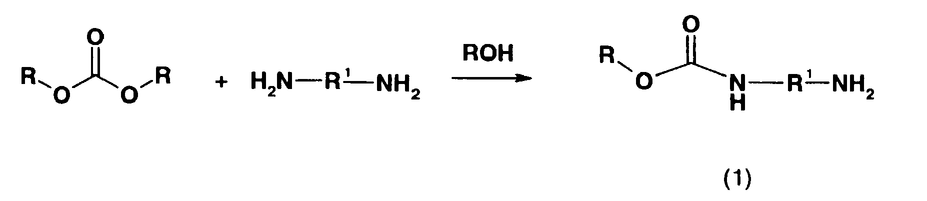

Dabei können R und R¹ beliebige aliphatische, aromatische oder araliphatische Reste sein.

Bei der Herstellung des Kondensationsproduktes (A) aus einem Dicarbonat und einem dreiwertigen Amin bei einem Molverhältnis von 1 : 1 resultiert im Mittel ein Molekül des Typs XY₂, veranschaulicht durch die allgemeine Formel 2. Fokale Gruppe ist hier eine Carbamatgruppe.

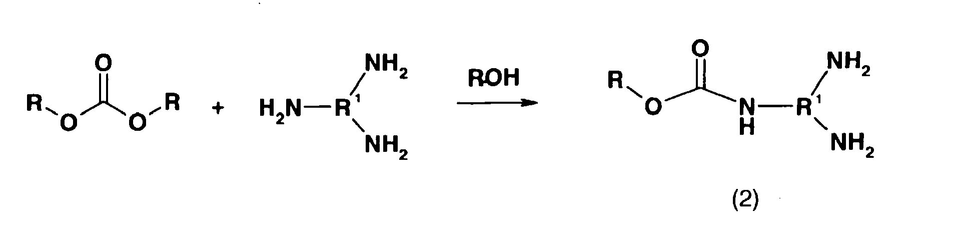

Bei der Herstellung des Kondensationsproduktes (A) aus einem Carbonat und einem vierwertigen Amin ebenfalls mit dem Molverhältnis 1 : 1 resultiert im Mittel ein Molekül des Typs XY₃, veranschaulicht durch die allgemeine Formel 3. Fokale Gruppe ist hier ebenfalls eine Carbamatgruppe.

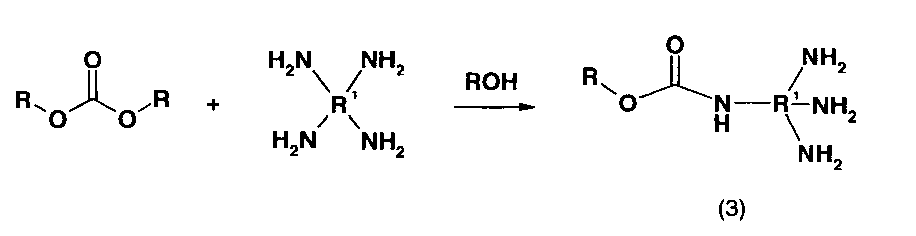

Wird ein Carbonat mit einem Triamin umgesetzt und beträgt das Molverhältnis Carbonat zu Triamin 2 : 1, so resultiert im Mittel ein einfachstes Kondensationsprodukt (A) des Typs X₂Y, welches durch die allgemeine Formel 4 veranschaulicht wird. Fokale Gruppe ist hier eine Aminogruppe.

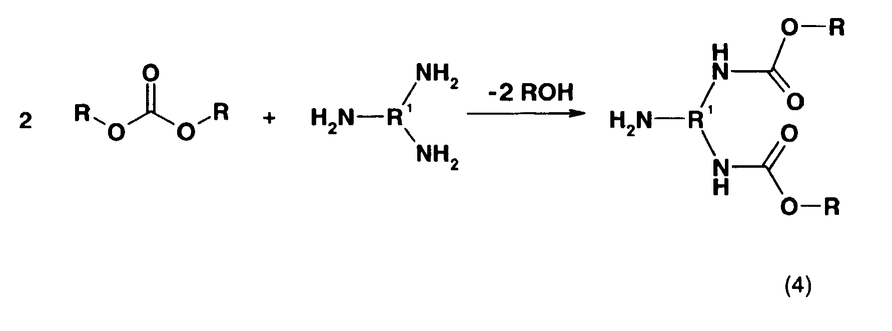

Werden zu den Komponenten zusätzlich difunktionelle Verbindungen, z.B. ein Carbonat oder ein Diamin gegeben, so bewirkt dies eine Verlängerung der Ketten, wie beispielsweise in der allgemeinen Formel 5 veranschaulicht. Es resultiert wieder im Mittel ein Molekül des Typs XY₂, fokale Gruppe ist ein Carbamat.

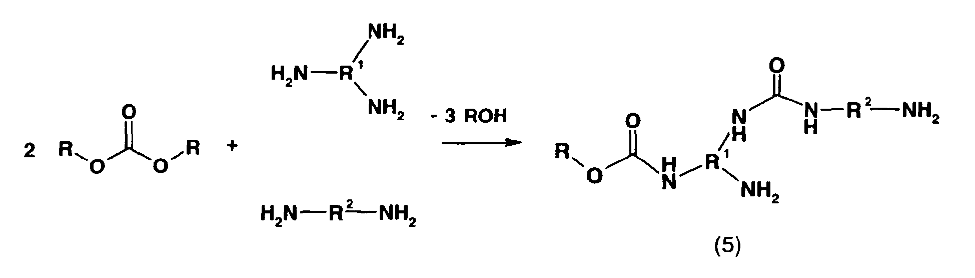

Die beispielhaft in den Formeln 1 - 5 beschriebenen einfachen Kondensationsprodukte (A) reagieren intermolekular unter Bildung von hochfunktionellen Polykondensationsprodukten, im folgenden Polykondensationsprodukte (P) genannt. Die Umsetzung zum Kondensationsprodukt (A) und zum Polykondensationsprodukt (P) erfolgt üblicherweise bei einer Temperatur von 0 bis 250 °C, bevorzugt bei 60 bis 160°C in Substanz oder in Lösung.

Aufgrund der Beschaffenheit der Kondensationsprodukte (A) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) entweder eine Carbamatgruppe als fokale Gruppe und mehr als zwei mit Carbonat- oder Carbamatgruppen reaktive Amine oder aber eine mit Carbonat- oder Carbamatgruppen reaktives Amin als fokale Gruppe und mehr als zwei Carbamatgruppen auf. Die Anzahl der reaktiven Gruppen ergibt sich dabei aus der Beschaffenheit der eingesetzten Kondensationsprodukte (A) und dem Polykondensationsgrad.

Beispielsweise kann ein Kondensationsprodukt (A) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

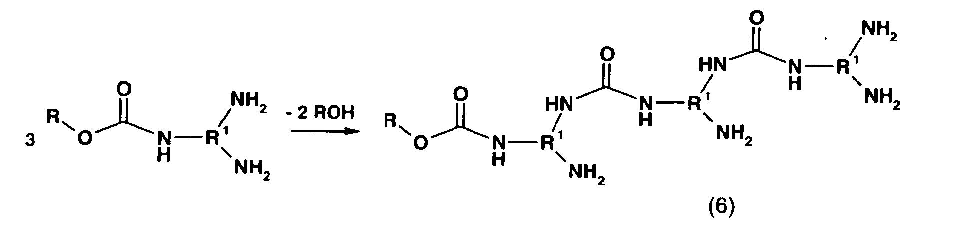

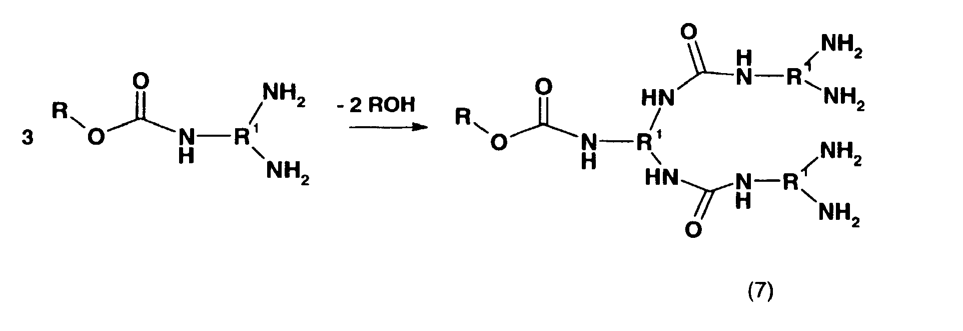

In den Formel 2 - 7 können R und R¹ beliebige aliphatische, aromatische oder araliphatische Reste sein.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (A) oder das Polykondensationsprodukt (P) lagerstabil ist.

In einer weiteren Ausführungsform kann, sobald aufgrund der intermolekularen Reaktion des Kondensationsproduktes (A) ein Polykondensationsprodukt (P) mit gewünschtem Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbamatgruppe als fokaler Gruppe zum Beispiel ein Mono-, Di- oder Polyamin zugegeben werden. Bei einem Amin als fokaler Gruppe kann dem Produkt (P) beispielsweise ein Mono-, Di- oder Polyurethan, ein Mono-, Di- oder Polyisocyanat, ein Aldehyd, Keton oder ein mit Amin reaktives Säurederivat zugegeben werden.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen. Die Kondensationsprodukte (A) bzw. die Polykondensationsprodukte (P), die bei erhöhter Temperatur hergestellt wurden, sind bei Raumtemperatur üblicherweise über einen längeren Zeitraum stabil.

Die Herstellung der erfindungsgemäßen, hochfunktionellen hochverzweigten Polyharnstoffe erfolgt im Allgemeinen in einem Druckbereich von 0,1 mbar bis 20 bar, bevorzugt bei 3 mbar bis 3 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform können die erfindungsgemäßen Polyharnstoffe weitere funktionelle Gruppen enthalten. Die Funktionalisierung kann dabei während der Umsetzung des Carbonats mit dem oder den Aminen, also während der den Molekulargewichtsaufbau bewirkenden Polykondensationsreaktion, oder aber nach Beendigung der Polykondensationsreaktion durch nachträgliche Funktionalisierung der erhaltenen Polyharnstoffe erfolgen.

Gibt man vor oder während des Molekulargewichtsaufbaus Komponenten zu, die neben Amino- oder Carbamatgruppen weitere funktionelle Gruppen aufweisen, so erhält man einen Polyharnstoff mit statistisch verteilten weiteren, das heißt von den Carbamat- oder Aminogruppen verschiedenen funktionellen Gruppen.

Beispielsweise können vor oder während der Polykondensation Komponenten zugegeben werden, die neben Aminogruppen oder Carbamatgruppen Hydroxylgruppen, Mercaptogruppen, tertiäre Amingruppen, Ethergruppen, Carboxylgruppen, Sulfonsäuregruppen, Phosphonsäuregruppen, Silangruppen, Siloxangruppen, Arylreste oder langkettige Alkylreste aufweisen.

Hydroxylgruppen aufweisende Komponenten, die zur Funktionalisierung zugesetzt werden können, umfassen beispielsweise Ethanolamin, N-Methylethanolamin, Propanolamin, 1-sopropanolamin, Butanolamin, 2-Amino-1-butanol, 2-(Butylamino)ethanol, 2-(Cyclohexylamino)ethanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan oder Tris(hydroxyethyl)aminomethan.

Mercaptogruppen enthaltende Komponenten, die zur Funktionalisierung zugesetzt werden können, umfassen beispielsweise Cysteamin. Mit tertiären Aminogruppen lassen sich die hochverzweigten Polyharnstoffe zum Beispiel durch Mitverwendung von N-Methyldiethylentriamin oder N,N-Dimethylethylendiamin funktionalisieren. Mit Ethergruppen lassen sich die hochverzweigten Polyharnstoffe durch Mitverwendung von Amin-terminierten Polyetherolen (sogenannten Jeffaminen) funktionalisieren. Mit Säuregruppen lassen sich die hochverzweigten Polyharnstoffe zum Beispiel durch Mitverwendung von Aminocarbonsäuren, Aminosulfonsäuren oder Aminophosphonsäuren funktionalisieren. Mit Silizium enthaltenden Gruppen lassen sich die hochverzweigten Polyharnstoffe durch Mitverwendung von Hexamethyldisilazan funktionalisieren. Mit langkettigen Alkylresten lassen sich die hochverzweigten Polyharnstoffe durch Mitverwendung von Alkylaminen oder Alkylisocyanaten mit langkettigen Alkylresten funktionalisieren.

Weiterhin lassen sich die Polyharnstoffe auch durch Einsatz geringer Mengen an Monomeren funktionalisieren, die von Aminogruppen oder Carbamatgruppen verschiedene funktionelle Gruppen aufweisen. Genannt seien hier beispielsweise di-, tri- oder höherfunktionelle Alkohole, die über Carbonat- oder Carbamatfunktionen in den Polyharnstoff eingebaut werden können. So lassen sich zum Beispiel hydrophobe Eigenschaften durch Zusatz langkettiger Alkandiole erzielen, während Polyethylenoxiddiole oder -triole hydrophile Eigenschaften im Polyharnstoff erzeugen.

Die genannten, von Amin-, Carbonat- oder Carbamatgruppen verschiedenen funktionellen Gruppen, die vor oder während der Polykondensation eingeführt werden, werden im Allgemeinen in Mengen von 0,1 bis 80 mol.-%, bevorzugt in Mengen von 1 bis 50 mol.-%, bezogen auf die Summe der Amino-, Carbamat- und Carbonatgruppen, eingeführt.

Eine nachträgliche Funktionalisierung von Aminogruppen enthaltenden hochfunktionellen hochverzweigten Polyharnstoffen kann zum Beispiel erreicht werden durch Zugabe von Säuregruppen, Isocyanatgruppen, Ketogruppen oder Aldehydgruppen enthaltenden Molekülen oder von aktivierte Doppelbindungen, zum Beispiel acrylische Doppelbindungen, enthaltenden Molekülen. Beispielsweise lassen sich Säuregruppen enthaltende Polyharnstoffe durch Umsetzung mit Acrylsäure oder Maleinsäure und deren Derivaten mit gegebenenfalls anschließender Hydrolyse erhalten.

Weiterhin können Aminogruppen enthaltende hochfunktionelle Polyharnstoffe durch Umsetzung mit Alkylenoxiden, zum Beispiel Ethylenoxid, Propylenoxid oder Butylenoxid, in hochfunktionelle Polyharnstoff-Polyole überführt werden.

Durch Salzbildung mit Protonensäuren oder durch Quaternisierung der Aminofunktionen mit Alkylierungsreagenzien, wie Methylhalogeniden oder Dialkylsulfaten, können die hochfunktionellen, hochverzweigten Polyharnstoffe wasserlöslich oder wasserdispergierbar eingestellt werden.

Um eine Hydrophobierung zu erreichen, können Amin-terminierten hochfunktionelle hochverzweigte Polyharnstoffe mit gesättigten oder ungesättigten langkettigen Carbonsäuren, deren gegenüber Amin-Gruppen reaktiven Derivaten oder auch mit aliphatischen oder aromatischen Isocyanaten umgesetzt werden.
Mit Carbamatgruppen terminierte Polyharnstoffe können durch Umsetzung mit langkettigen Alkylaminen oder langkettigen aliphatischen Monoalkoholen hydrophobiert werden.

Ein großer Vorteil des erfindungsgemäßen Verfahrens liegt in seiner Wirtschaftlichkeit. Sowohl die Umsetzung zu dem Kondensationsprodukt (A) oder Polykondensationsprodukt (P) als auch die Reaktion von (A) oder (P) zu Polyharnstoffen mit weiteren funktionellen Gruppen kann in einer Reaktionsvorrichtung erfolgen, was technisch und wirtschaftlich vorteilhaft ist.

Gegenstand der vorliegenden Erfindung ist auch die Verwendung der erfindungsgemäßen hochfunktionellen hochverzweigten Polyharnstoffe als Haftvermittler und Thixotropiermittel und als Komponenten zur Herstellung von Lacken, Überzügen, Klebstoffen, Dichtmassen, Gießelastomeren und Schaumstoffen.

Die vorliegende Erfindung wird durch die nachfolgenden Beispiele näher erläutert.

### Beispiele

### Allgemeine Arbeitsvorschrift:

Das Amin bzw. die Aminmischung, Dialkylcarbonat und Katalysator (ppm bezogen auf Masse Amin) wurden gemeinsam gemäß Tabelle 1 in einem Dreihalskolben, ausgestattet mit Rührer, Rückflusskühler und Innenthermometer, vorgelegt und die Mischung auf 145°C erwärmt. Mit fortschreitender Reaktionsdauer reduzierte sich dabei die Temperatur des Reaktionsgemisches bedingt durch die einsetzende Siedekühlung des freigesetzten Monoalkohols auf etwa 125 - 135°C. Nach 3 h Reaktionsdauer unter Rückfluss wurde der Rückflusskühler gegen einen absteigenden Kühler getauscht, der Monoalkohol abdestilliert und die Temperatur des Reaktionsgemisches langsam bis auf 155°C erhöht. Nach Beendigung der Alkoholentwicklung wurde das Reaktionsgemisch auf Raumtemperatur abgekühlt und anschließend per Gelpermeationschromatographie mit einem Refraktometer als Detektor analysiert. Als mobile Phase wurde Hexafluorisopropanol verwendet, als Standard zur Bestimmung des Molekulargewichts wurde Polymethylmethacrylat (PMMA) eingesetzt.

**Tabelle 1: Einsatzstoffe und analytische Daten**

| Beispiel Nr. | Amin | Carbonat | Molverhältnis Amin : Carbonat | Katalysator (ppm) | Molmasse (Mn) | Molmasse (Mw) |
|---|---|---|---|---|---|---|
| | | | | DBTL | | |
| 1 | TAEA | DEC | 1:1 | (1000) | 5400 | 16600 |
| | | | | DBTL | | |
| 2 | DETA | DMC | 1:1 | (1000) | 1700 | 2200 |
| | | | | DBTL | | |
| 3 | TAEA | DEC | 1:2 | (1400) | 2400 | 3600 |
| | | | | K₂CO₃ | | |
| 4 | TAEA | DMC | 1:1 | (1400) | 1600 | 2400 |
| | TAEA / DAPMA | | | DBTL | | |
| 5 | Molar 1:1 | DEC | 1:1 | (1200) | 6500 | 22800 |
| | DETA/ HDA | | | DBTL | | |
| 6 | Molar 1:1 | DEC | 1:1 | (1200) | 1200 | 1700 |
| | TAEA/ IPDA | | | K₂CO₃ | | |
| 7 | Molar 1:1 | DEC | 1:1 | (1200) | 1600 | 2400 |
| | TAEA/ HDA | | | K₂CO₃ | | |
| 8 | Molar 1:1 | DEC | 1:1 | (1200) | 1900 | 2800 |

| | | | | | | |
|---|---|---|---|---|---|---|
| TAEA: Tris(aminoethyl)amin DETA: Diethylentriamin DAPMA: Di(aminopropyl)methylamin HDA: Hexamethylendiamin IPDA: Isophorondiamin DEC: Diethylcarbonat DMC: Dimethylcarbonat DBTL: Dibutylzinndilaurat | | | | | | |

## Patentansprüche

1. Verfahren zur Herstellung von hochfunktionellen hochverzweigten Polyharnstoffen, bei dem ein oder mehrere Carbonate mit einem oder mehreren Aminen mit mindestens zwei primären und/oder sekundären Aminogruppen umgesetzt werden, wobei mindestens ein Amin mindestens drei primäre und/oder sekundäre Aminogruppen aufweist.

2. Verfahren nach Anspruch 1, **dadurch gekennzeichnet, dass** Amine mit zwei primären und/oder sekundären Aminogruppen umgesetzt werden, wobei diese ausgewählt sind aus der Gruppe bestehend aus Ethylendiamin, N-Alkylethylendiamin, Propylendiamin, 2,2-Dimethyl-1,3-propandiamin, N-Alkylpropylendiamin, Butylendiamin, N-Alkylbutylendiamin, Pentandiamin, Hexamethylendiamin, N-Alkylhexamethylendiamin, Heptandiamin, Octandiamin, Nonandiamin, Decandiamin, Dodecandiamin, Hexadecandiamin, Toluylendiamin, Xylylendiamin, Diaminodiphenylmethan, Diaminodicyclohexylmethan, Phenylendiamin, Cyclohexylendiamin, Bis(aminomethyl)cyclohexan, Diaminodiphenylsulfon, Isophorondiamin, 2-Butyl-2-ethyl-1,5-pentamethylendiamin, 2,2,4- oder 2,4,4-Trimethyl-1,6-hexamethylendiamin, 2-Aminopropylcyclohexylamin, 3(4)-Aminomethyl-1-methylcyclohexylamin, 1,4-Diamino-4-methylpentan, Amin-terminierten Polyoxyalkylenpolyolen (sogenannte Jeffaminen) oder Amin-terminierten Polytetramethylenglykolen.

3. Verfahren nach Anspruch 1 oder 2, **dadurch gekennzeichnet, dass** das mindestens eine Amin mit mindestens drei primären und/oder sekundären Aminogruppen ausgewählt ist aus der Gruppe bestehend aus Bis(aminoethyl)amin, Bis(aminopropyl)amin, Bis(aminobutyl)amin Tris(aminoethyl)amin, Tris(aminopropyl)amin, Tris(aminohexyl)amin, Trisaminohexan, 4-Amino-methyl-1,8-octamethylendiamin, Trisaminononan, N-(2-Aminoethyl)propandiamin, N,N'-Bis(3-aminopropyl)ethylendiamin, N,N'-Bis(3-aminopropyl)butandiamin, N,N,N',N'-Tetra(3-aminopropyl)ethylendiamin, N,N,N',N'-Tetra(3-aminopropyl)butandiamin, Melamin, oligomere Diaminodiphenylmethane, drei- oder höherfunktionellen Amin-terminierten Polyoxyalkylenpolyolen, drei- oder höherfunktionellen Polyethyleniminen oder drei- oder höherfunktionellen Polypropyleniminen.

4. Verfahren nach einem der Ansprüche 1 bis 3, **dadurch gekennzeichnet, dass** das Carbonat ausgewählt ist aus der Gruppe bestehend aus Ethylencarbonat, 1,2- oder 1,3-Propylencarbonat, Diphenylcarbonat, Ditolylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Diheptylcarbonat, Dioctylcarbonat, Didecylcarbonat und Didodecylcarbonat.

5. Verfahren nach einem der Ansprüche 1 bis 4, **dadurch gekennzeichnet, dass** ein Amin oder ein Amingemisch mit einer mittleren Amin-Funktionalität von 2,1 bis 10 umgesetzt wird.

6. Verfahren nach einem der Ansprüche 1 bis 5, **dadurch gekennzeichnet, dass** die Umsetzung des oder der Carbonate mit dem oder den Aminen in einem Lösungsmittel erfolgt.

7. Verfahren nach Anspruch 6, **dadurch gekennzeichnet, dass** das Lösungsmittel ausgewählt ist aus der Gruppe bestehend aus Decan, Dodecan, Benzol, Toluol, Chlorbenzol, Dichlorbenzol, Xylol, Dimethylformamid, Dimethylacetamid und Solventnaphtha.

8. Verfahren nach einem der Ansprüche 1 bis 5, **dadurch gekennzeichnet, dass** die Umsetzung in Abwesenheit eines inerten Lösungsmittels erfolgt.

9. Hochfunktionelle hochverzweigte Polyharnstoffe, herstellbar nach dem Verfahren gemäß einem der Ansprüche 1 bis 8.

10. Verwendung der hochfunktionellen hochverzweigten Polyharnstoffe nach Anspruch 9 als Haftvermittler und Thixotropiermittel und als Komponenten zur Herstellung von Lacken, Überzügen, Klebstoffen, Dichtmassen, Gießelastomeren und Schaumstoffen.

## Claims

1. A process for preparing high-functionality highly branched polyureas which comprises reacting one or more carbonates with one or more amines having at least two primary and/or secondary amino groups, at least one amine having at least three primary and/or secondary amino groups.

2. The process according to claim 1, wherein amines having two primary and/or secondary amino groups are reacted, these amines being selected from the group consisting of ethylenediamine, N-alkylethylenediamine, propylenediamine, 2,2-dimethyl-1,3-propanediamine, N-alkylpropylenediamine, butylenediamine, N-alkylbutylenediamine, pentanediamine, hexamethylenediamine, N-alkylhexamethylenediamine, heptanediamine, octanediamine, nonanediamine, decanediamine, dodecanediamine, hexadecanediamine, tolylenediamine, xylylenediamine, diaminodiphenylmethane, diaminodicyclohexylmethane, phenylenediamine, cyclohexylenediamine, bis(aminomethyl)cyclohexane, diaminodiphenyl sulfone, isophoronediamine, 2-butyl-2-ethyl-1,5-pentamethylenediamine, 2,2,4- or 2,4,4-trimethyl-1,6-hexamethylenediamine, 2-aminopropylcyclohexylamine, 3(4)-aminomethyl-1-methylcyclohexylamine, 1,4-diamino-4-methylpentane, amine-terminated polyoxyalkylene polyols (known as Jeffamines) or amine-terminated polytetramethylene glycols.

3. The process according to claim 1 or 2, wherein the at least one amine having at least three primary and/or secondary amino groups is selected from the group consisting of bis(aminoethyl)amine, bis(aminopropyl)amine, bis(aminobutyl)amine, tris(aminoethyl)amine, tris(aminopropyl)amine, tris(aminohexyl)amine, trisaminohexane, 4-aminomethyl-1,8-octamethylenediamine, trisaminononane, N-(2-aminoethyl)propanediamine, N,N'-bis(3-aminopropyl)ethylenediamine, N,N'-bis(3-aminopropyl)butanediamine, N,N,N',N'-tetra(3-aminopropyl)ethylenediamine, N,N,N',N'-tetra(3-aminopropyl)butanediamine, melamine, oligomeric diaminodiphenylmethanes, amine-terminated polyoxyalkylene polyols with a functionality of three or more, polyethyleneimines with a functionality of three or more or polypropyleneimines with a functionality of three or more.

4. The process according to any one of claims 1 to 3, wherein the carbonate is selected from the group consisting of ethylene carbonate, 1,2- or 1,3-propylene carbonate, diphenyl carbonate, ditolyl carbonate, dinaphthyl carbonate, ethyl phenyl carbonate, dibenzyl carbonate, dimethyl carbonate, diethyl carbonate, dipropyl carbonate, dibutyl carbonate, diisobutyl carbonate, dipentyl carbonate, dihexyl carbonate, diheptyl carbonate, dioctyl carbonate, didecyl carbonate, and didodecyl carbonate.

5. The process according to any one of claims 1 to 4, wherein an amine or an amine mixture having an average amine functionality of from 2.1 to 10 is reacted.

6. The process according to any one of claims 1 to 5, wherein the reaction of the carbonate or carbonates with the amine or amines takes place in a solvent.

7. The process according to claim 6, wherein the solvent is selected from the group consisting of decane, dodecane, benzene, toluene, chlorobenzene, dichlorobenzene, xylene, dimethylformamide, dimethylacetamide, and solvent naphtha.

8. The process according to any one of claims 1 to 5, wherein the reaction takes place in the absence of an inert solvent.

9. High-functionality highly branched polyureas preparable by the process according to any one of claims 1 to 8.

10. Use of the high-functionality highly branched polyureas according to claim 9 as adhesion promoters and thixotropic agents and as components for preparing paints and varnishes, coatings, adhesives, sealants, castable elastomers, and foams.

## Revendications

1. Procédé en vue de la fabrication de polyurées fortement ramifiées à fonctionnalité élevée, lors duquel l'on fait réagir un ou plusieurs carbonates avec une ou plusieurs amines ayant au moins deux groupements amino primaires et/ou secondaires, une amine au moins présentant au moins trois groupements amino primaires et/ou secondaires.

2. Procédé selon la revendication 1, **caractérisé en ce que** l'on fait réagir des amines ayant deux groupements amino primaires et/ou secondaires, celles-ci étant sélectionnées parmi le groupe se composant de l'éthylènediamine, de la N-alkyléthylènediamine, de la propylènediamine, de la 2,2-diméthyl-1,3-propanediamine, de la N-alkylpropylènediamine, de la butylènediamine, de la N-alkylbutylènediamine, de la pentanediamine, de l'hexaméthylènediamine, de la N-alkylhexaméthylènediamine, de l'heptanediamine, de l'octanediamine, de la nonanediamine, de la décanediamine, de la dodécanediaminé, de l'hexadécanediamine, de la toluylènediamine, de la xylylènediamine, du diaminodiphénylméthane, du diaminodicyclohexylméthane, de la phénylènediamine, de la cyclohexylènediamine, du bis(aminométhyl)cyclohexane, du diaminodiphénylsulfone, de l'isophoronediamine, de la 2-butyl-2-éthyl-1,5-pentaméthylènediamine, de la 2,2,4- ou de la 2,4,4-triméthyl-1,6-hexaméthylènediamine, de la 2-aminopropylcyclohexylamine, de la 3(4)-aminométhyl-1-méthylcyclohexylamine, du 1,4-diamino-4-méthylpentane, des polyoxyalcylènepolyols à terminaison amine (ce que l'on appelle les amines Jeff) ou des polytétraméthylèneglycols à terminaison amine.

3. Procédé selon la revendication 1 ou 2, **caractérisé en ce qu'**au moins une amine ayant au moins trois groupements amino primaires et/ou secondaires est sélectionnée parmi le groupe se composant de la bis(aminoéthyl)amine, de la bis(aminopropyl)amine, de la bis(aminobutyl)amine, de la tris(aminoéthyl)amine, de la tris(aminopropyl)amine, de la tris(aminohexyl)amine, du trisaminohexane, de la 4-amino-méthyl-1,8-octaméthylènediamine, du trisaminononane, de la N-(2-aminoéthyl)propandiamine, de la N,N'-bis(3-aminopropyl)éthylènediamine, de la N,N'-bis(3-aminopropyl)butanediamine, de la N,N,N',N'-tétra(3-aminopropyl)éthylenediamine, de la N,N,N',N'-tétra(3-aminopropyl)butanediamine, de la mélamine, d'oligomères du diaminodiphénylméthane, de polyoxyalcylènepolyols à terminaison amine ayant trois ou plusieurs fonctionnalités, des polyéthylèneimines ayant trois ou plusieurs fonctionnalités ou des polypropylèneimines ayant trois ou plusieurs fonctionnalités.

4. Procédé selon l'une quelconque des revendications 1 à 3, **caractérisé en ce que** le carbonate est sélectionné parmi le groupe se composant du carbonate d'éthylène, du carbonate de 1,2- ou de 1,3-propylène, du carbonate de diphényle, du carbonate de ditoluyle, du carbonate de dinaphtyle, du carbonate d'éthylphényle, du carbonate de dibenzyle, du carbonate de diméthyle, du carbonate de diéthyle, du carbonate de dipropyle, du carbonate de dibutyle, du carbonate de diisobutyle, du carbonate de dipentyle, du carbonate de dihexyle, du carbonate de diheptyle, du carbonate de dioctyle, du carbonate de didécyle et du carbonate de didodécyle.

5. Procédé selon l'une quelconque des revendications 1 à 4, **caractérisé en ce que** l'on fait réagir une amine ou un mélange d'amines ayant une fonctionnalité d'amine moyenne de 2,1 à 10.

6. Procédé selon l'une quelconque des revendications 1 à 5, **caractérisé en ce que** la réaction du ou des carbonates avec l'amine ou les amines se fait dans un solvant.

7. Procédé selon la revendication 6, **caractérisé en ce que** le solvant est choisi parmi le groupe se composant du décane, du dodécane, du benzène, du toluène, du chlorobenzène, du dichlorobenzène, du xylène, du diméthylformamide, du diméthylacétamide et du naphta.

8. Procédé selon l'une quelconque des revendications 1 à 5, **caractérisé en ce que** la réaction se fait en l'absence d'un solvant inerte.

9. Polyurées hautement ramifiés à fonctionnalité élevée, que l'on peut préparer conformément au procédé selon l'une quelconque des revendications 1 à 8.

10. Utilisation de polyurées hautement ramifiées à fonctionnalité élevée selon la revendication 9, en tant qu'agents promoteurs de l'adhésion et en tant qu'agents thixotropiques et en tant que composants en vue de la fabrication de vernis, de revêtements, d'adhésifs, des masses d'étanchéité, d'élastomères de coulée et de substances alvéolaires.
